# EUROPÄISCHE PATENTSCHRIFT

(11) **EP 1 747 916 B1**
(45) Veröffentlichungstag und Bekanntmachung des Hinweises auf die Patenterteilung: **29.05.2013**
(21) Anmeldenummer: 06014876.4
(22) Anmeldetag: 18.07.2006
(51) Int. Cl.: B60G 15/06

(54) **Lagerung für einen Schwingungsdämpfer**
Mounting for a vibration damper
Support pour un amortisseur de vibrations

(30) Priorität: 25.07.2005 DE 102005035256
(43) Veröffentlichungstag der Anmeldung: 31.01.2007
(73) Patentinhaber: ZF Friedrichshafen AG, 88046 Friedrichshafen (DE)
(72) Erfinder: Pflaum, Thomas, 96049 Bamberg (DE); Freisinger, Claudius, 70563 Stuttgart (DE); Zietsch, Andreas, 97532 Üchtelhausen-Zell (DE)

(56) Entgegenhaltungen:
- DE-A1- 3 716 099
- DE-C1- 10 051 769
- US-A- 5 772 380
- PATENT ABSTRACTS OF JAPAN Bd. 008, Nr. 274 (M-345), 14. Dezember 1984 (1984-12-14) & JP 59 143779 A (NISSAN JIDOSHA KK), 17. August 1984 (1984-08-17)

## Beschreibung

Die Erfindung betrifft eine Lagerung für einen Schwingungsdämpfer gemäß dem Oberbegriff von Patentanspruch 1.

Aus der gattungsbildenden DE 100 51 769 C1 ist eine Lagerung für einen Schwingungsdämpfer bekannt, umfassend mindestens eine Verdrehfläche, die mit einer fahrzeugseitigen Gegenfläche zumindest während des Montageablaufs des Schwingungsdämpfers in einer Aufnahmeöffnung des Fahrzeugs in Wirkverbindung steht, wobei die mindestens eine Verdrehfläche und die Gegenfläche lagerseitige Verbindungsmittel zu fahrzeugseitigen Verbindungsmitteln rotatorisch ausrichtet, wobei die Lagerung eine Lagerkappe aufweist, die die mindestens eine Verdrehfläche aufweist und die Lagerkappe drehmomentübertragend in Wirkverbindung mit der gesamten Lagerung steht.

Der große Vorteil einer derartigen Lagerkappe besteht darin, dass der Schwingungsdämpfer bezogen auf die Ausrichtung in Umfangsrichtung bei der Montage relativ ungenau in die Montagestelle eingeführt werden kann. Die exakte Positionierung übernimmt die Lagerkappe. Noch deutlicher wird der Vorteil der Kappe im Reparaturfall in einer Werkstatt. Dort stehen keine Montageroboter zur Verfügung, sondern der Monteur müsste per Augenschein die korrekte Position finden.

Sofern der Bauraum im Fahrzeug vorhanden ist, kann die Montagehilfe auch als Abdeckung der Kolbenstange verwendet werden.

Wenn der Schwingungsdämpfer von dem Monteur oder mittels einer Vorrichtung in den Radkasten eingeführt wird, müssen sofort die Befestigungsschrauben zwischen der Lagerung und dem Fahrzeugaufbau montiert werden. Bei der Fahrzeugneumontage tritt das Problem auf, dass die Zuführbewegung des Schwingungsdämpfers einerseits von der Unterseite des Fahrzeugs erfolgen muss, andererseits ein Monteur von der Oberseite die Befestigungsmittel, in der Regel, Gewindemuttern, montiert. Für die Auslegung eines Montagebands sind diese Montageabläufe hinderlich.

Bei der Handmontage im Reparaturfall ist es u. U. notwendig, dass ein Monteur den Schwingungsdämpfer in den Radkasten einführt und hält, während ein zweiter Monteur dann die Befestigungsmittel montiert.

Die DE 37 16 099 A1 beschreibt eine Montagekappe für die Montage eines Schwingungsdämpfers in eine Aufnahmeöffnung eines Fahrzeugs. Die Kappe verfügt über hakenförmige Segmente, an denen die Kappe und damit das an ihr hängende Teil in die kreisrunde Öffnung der Karosserie eingehängt wird. Die Kappe dient dazu, den Schwingungsdämpfer während der Montage an der Karosserie zu halten, bis der Schwingungsdämpfer in einem fortgeschrittenen Abschnitt der Montage endgültig befestigt wird.

Aufgabe der vorliegenden Erfindung ist es, eine Lagerung für einen Schwingungsdämpfer zu realisieren, die das aus dem Stand der Technik bekannte Problem des Montageaufwands minimiert.

Erfindungsgemäß wird die Aufgabe durch die Merkmale des Patentanspruchs 1 gelöst.

Der Vorteil der Erfindung besteht darin, dass die Lagerkappe zwei Tragfunktionen übernimmt, einerseits den Schwingungsdämpfer zum Träger und den Träger wiederum zu Karosserie. Für den Montageablauf ergibt sich daraus der entscheidende Vorteil, dass der Monteur durch den Radkasten das gesamte Modul bestehend aus Lagerung und Schwingungsdämpfer in die Karosserie einführen kann, wobei sich die Lagerung selbsttätig in Umfangsrichtung ausrichtet, so dass die Befestigungsmittel zwischen der Lagerung und der Karosserie in Überdeckung stehen und die Lagerkappe das gesamte Aggregat in der Montageposition halten. Danach können von demselben Monteur über die geöffnete Front- oder Heckklappe die Befestigungsmittel fixiert werden.

Des Weiteren ist vorteilhafterweise vorgesehen, dass die mindestens eine Zunge in dem vom der Lagerkappe begrenzten Bauraum verläuft. Es wird der Bauraum genutzt, der durch die konische Form der Lagerkappe ohnehin zur Verfügung stand. Man muss keinen axialen Bauraum schaffen.

Die Lagerkappe soll so leicht und deshalb dünnwandig wie möglich gehalten werden. Deshalb ist die mindestens eine Aufnahme unabhängig von der Drehmomentübertragungsverbindung zwischen der Lagerkappe und dem Träger ausgeführt ist. Sollte die Aufnahme zusammen mit der Zunge auch Torsionskräfte übernehmen können, so müsste man die Wandstärke deutlich vergrößern, so dass wiederum der in der Lagerkappe nutzbare Bauraum im selben Maße abnimmt.

Die Lagerkappe weist mindestens eine Innenwandung auf, in der die Aufnahme für die Zunge ausgeführt ist. Die Innenwandung wird von der Zunge nur auf Zug beansprucht.

Die Zunge ist als ein L-förmigen Steg des Trägers ausgeführt, wobei durch diese Form auf einfache Art und Weise ein axialer Versatz zwischen der Oberseite des Trägers erreicht wird. Die Größe des axialen Versatzes bestimmt die axiale Eindringtiefe der Zunge in den vom der Lagerkappe begrenzten Raum.

Die Innenwandung ist in Grenzen radial elastisch ausgeführt ist, so dass die Zunge des Trägers keine radiale Montagebewegung ausführen muss. Im Hinblick auf eine einfache Montage weist die mindestens eine Innenwandung stirnseitig in Richtung der Zunge eine Einführschräge auf, die bei Kontakt mit der Zunge für eine radiale Ausweichbewegung der Innenwandung führt, so dass die Zunge leichter in die Aufnahme gleiten kann.

Die Lagerkappe weist zwei Hauptachsen unterschiedlicher Länge auf, wobei die mindestens eine Innenwandung im wesentlichen parallel zur kürzeren der beiden Hauptachsen verläuft. Damit kann ein relativ großer Abstand zwischen zwei Innenwandungen erreicht werden, so dass eine breite Basis für eine optimale Ausrichtung der Lagerung zur Karosserie zur Verfügung steht.

Die mindestens eine axial stützende Tragfläche verläuft im wesentlichen parallel zur längeren der beiden Hauptachsen. Der Bereich parallel zur längeren der beiden Hauptachsen ist bei konstanter Wandstärker prinzipbedingt leichter elastisch ausführbar. Des weiteren steht mehr Bauraum für Einschnitte zur Verfügung, die die Tragflächen der Lagerkappe in Grenzen eine radial elastische Bewegung bei der Montage der Lagerkappe in die Karosserie ausführen lassen.

Anhand der folgenden Figurenbeschreibung soll die Erfindung näher erläutert werden.

Es zeigt:
- Fig. 1: Darstellung der Einbausituation
- Fig. 2 -9: Lagerkappe als Einzelteil
- Fig. 10: Träger der Lagerung als Einzelteil
- Fig. 11: Lagerkappe auf Träger montiert

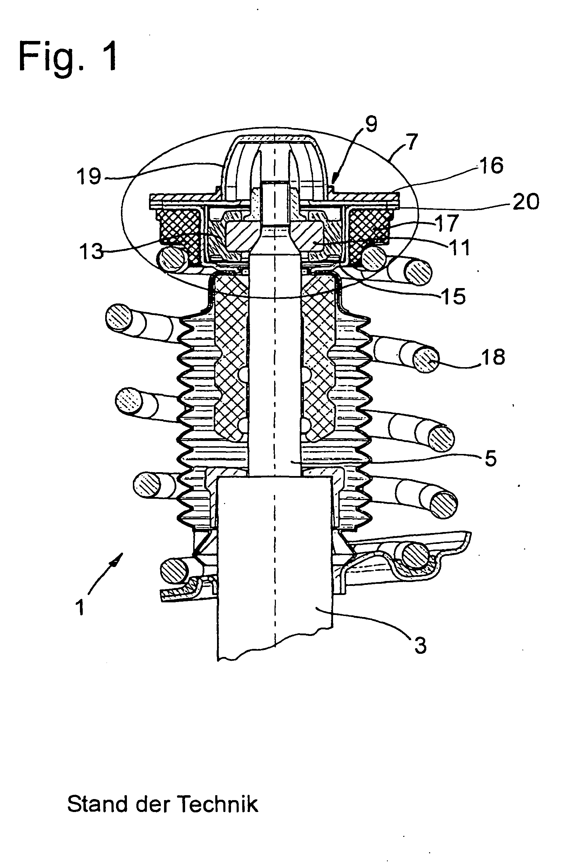

Die Fig. 1 zeigt die Einbausituation für das obere Ende eines Schwingungsdämpfers 1, der einen Zylinder 3 umfasst, in dem eine Kolbenstange 5 axial beweglich gelagert ist. An ihrem äußeren Ende weist die Kolbenstange eine Lagerung 7 an ein Fahrzeug auf, von dem nur eine Aufnahmeöffnung 9 innerhalb eines Trägers dargestellt ist. Eine derartige Aufnahmeöffnung kann z. B. in einem Innenkotflügel des Fahrzeugs ausgeführt sein.

Die Lagerung 7 umfasst einen Stützkörper 11, der von einem Federelement 13 zumindest teilweise eingeschlossen wird. Das Federelement wiederum wird von einem zweiteiligen Lagergehäuse 15 mit einem Träger 16 und einem Lagertopf 20 gekammert, an dem sich außenseitig eine Federunterlage 17 für eine Fahrzeugtragfeder 18 abstützt. Die gesamte Lagerung wird von einer Lagerkappe 19 abgedeckt.

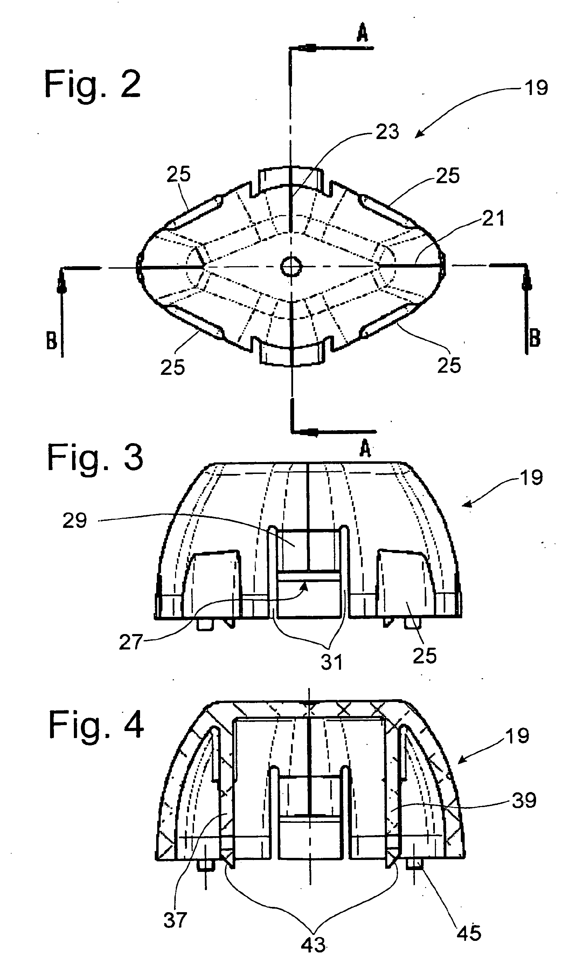

Die Figurengruppe 2 bis 9 zeigt die Lagerkappe nach Fig. 1 als Einzelteil. In der Draufsicht nach Fig. 2 ist erkennbar, dass die Lagerkappe 19 einen elliptischen Querschnitt mit zwei Hauptachsen 21; 23 unterschiedlicher Länge aufweist. Die Aufnahmeöffnung 9 im Fahrzeug verfügt über einen gleichartigen Querschnitt. Außenseitig sind im wesentlichen parallel zur langen Hauptachse 21 Verdrehflächen 25 ausgeführt, die zusammen mit fahrzeugseitigen Gegenflächen als Randbegrenzung der Aufnahmeöffnung eine Orientierung der Lagerkappe in Umfangsrichtung bewirken.

Etwa mittig zur langen Hauptachse sind in der Zusammenschau der Figuren 3; 5 und 6 gegenüberliegende Tragfläche 27 erkennbar, die auf der Oberseite des Randes der Aufnahmeöffnung 9 zur Anlage kommen und damit die Lagerkappe axial zur Fahrzeugkarosserie fixieren. Die Tragflächen sind stirnseitig auf radial elastischen Abschnitten 29 ausgeformt, die durch Einschnitte 31 von den weiteren Wandungsteilen der Lagerkappe getrennt sind. Der Abstand 33 der Tragflächen 27 zur Grundfläche 35 ist mindestens zu groß wie die Wandstärke des Randes der Aufnahmeöffnung 9.

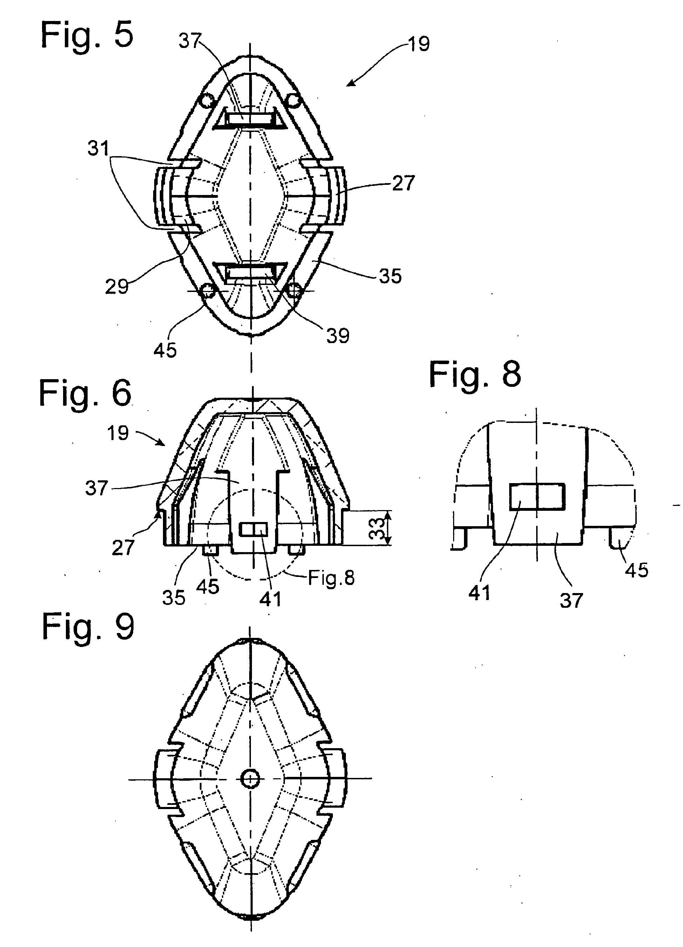

Die Figuren 4 als Längsschnitt durch die Lagerkappe 19, die Unteransicht 5 sowie der Querschnitt nach Fig. 6 verdeutlichen, dass in dem von der Lagerkappe begrenzten Innenraum im wesentlichen parallel zu der kurzen Hauptachse 23 Innenwandungen 37; 39 verlaufen. Diese Innenwandungen enthalten eine fensterartige Aufnahme 41. In Richtung der kurzen Hauptachse können die Innenwandungen in Grenzen elastisch deformiert werden, wobei untere Stirnflächen der Innenwandungen mit einer Einführschräge 43 versehen sind.

Des weiteren erstrecken sich ausgehend von der Grundfläche 35 zapfenförmige Vorsprüngen 45, die im montierten Zustand der Kappe als Drehmomentübertragungsverbindung dienen.

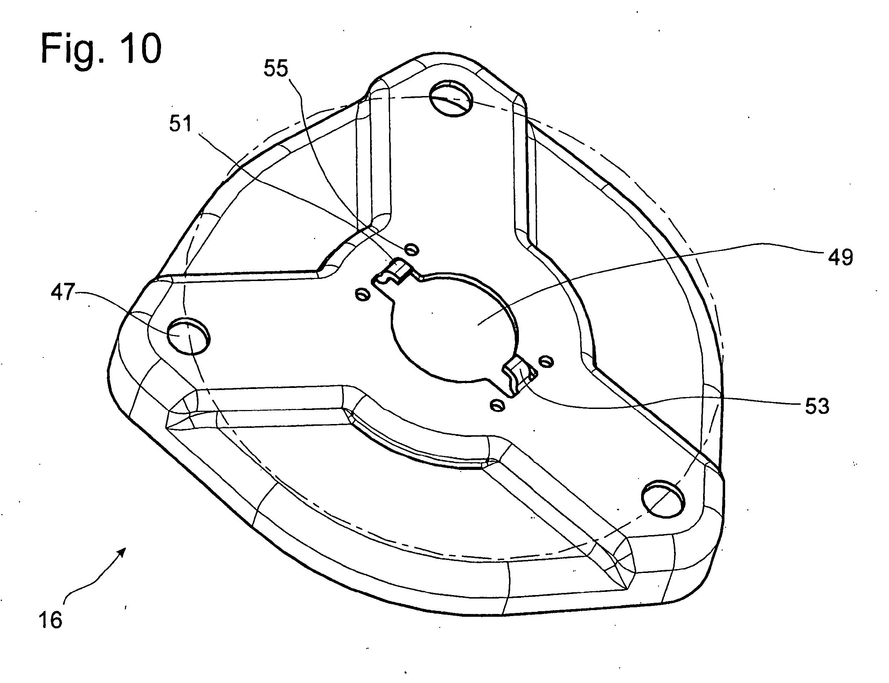

In der Fig. 10 ist der Träger 16 nach Fig. 1 als Einzelteil dargestellt. Auf einem äußeren Teilkreis sind Durchgangsöffnungen 47 für nicht dargestellte Befestigungsmittel zur Fahrzeugkarosserie angeordnet. Ein kreisförmiger Ausschnitt 49 bietet Bauraum für das obere Ende der Kolbenstange 5. Aus der Ebene des Trägers sind zwei gegenüberliegenden Zungen 51; 53 mit einem L-förmigen Querschnitt freigeschnitten. Seitlich zu den Zungen sind vier Öffnungen 55 ausgeführt, deren Abstandsmaße mit den Vorsprüngen 45 der Lagekappe identisch sind.

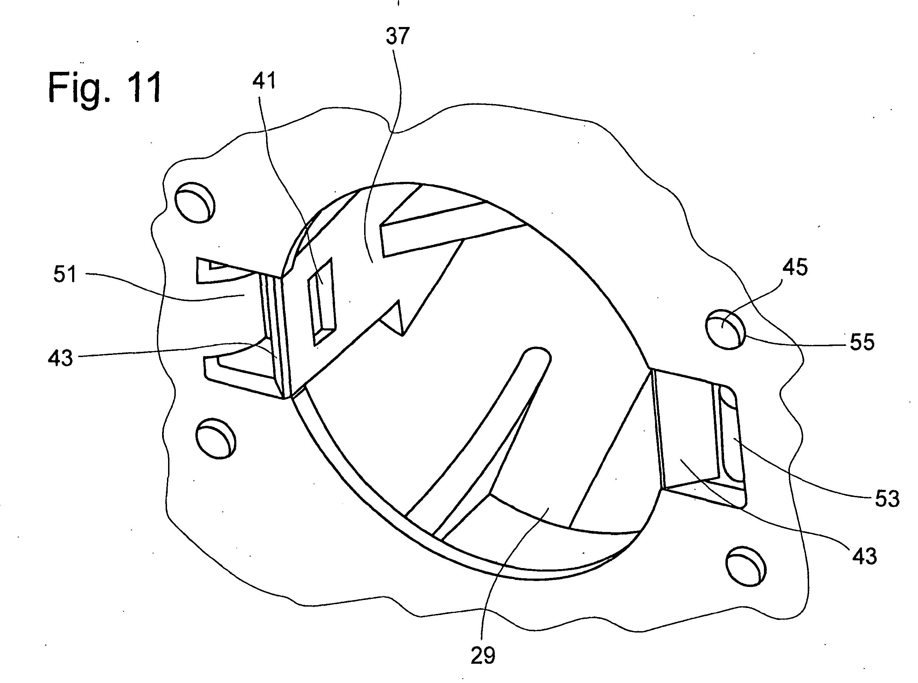

Bei der Montage wird der Schwingungsdämpfer nach Figur 1 mit dem Träger 16 auf der Oberseite mit einer Lagerkappe 19 bestückt. Dabei gleiten die Einführschrägen 43 auf der Oberseite der Zungen 51, 53 und drücken die Innenwandungen 37; 39 in Richtung der kurzen Hauptachse 23. Die Zungen 51; 53 verlaufen in dem von der Lagerkappe begrenzten Bauraum und können in die Aufnahmen 41 der Innenwandungen einrasten, so dass eine Formschlussverbindung zwischen dem Träger 16 und der Lagerkappe 19 vorliegt, wie in Figur 11 dargstellt ist. Des weiteren greifen die zapfenartigen Vorsprüngen 45 der Lagekappe in die Öffnungen 55 des Trägers 16. Deshalb überträgt die Verbindung Zunge 51; 53 mit der Aufnahme 41 keine Torsionskräfte zwischen der Lagerkappe und dem Träger.

Diese gesamte Baueinheit wird in die Aufnahmeöffnung 9 der Fahrzeugkarosserie eingeführt, wobei die Verdrehflächen 25 an der Außenseite der Lagerkappe 19 für eine Ausrichtung der Durchgangsöffnungen 47 zu entsprechenden Befestigungsmitteln der Fahrzeugkarosserie sorgen. Die radial elastischen Abschnitte 29 werden nach radial innen verformt und bewegen sich wieder in ihre entspannte Ausgangsstellung zurück, wenn die Lagerkappe ihre vorbestimmte Ausrichtung eingenommen hat. Die Trägerflächen 27 der Abschnitte 29 liegen dann axial auf dem Rand der Aufnahmeöffnung auf. In dieser Montagestufe hält die Lagerkappe 19 axial selbsttätig in der Aufnahmeöffnung und trägt durch die Formschlussverbindung Zungen 51, 53 und Aufnehmen 41 über den Träger 16 den Schwingungsdämpfer auch dann, wenn die Befestigungsmittel zwischen dem Träger und der Fahrzeugkarosserie noch nicht geschlossen sind.

## Patentansprüche

1. Fahrzeug, umfassend einen Schwingungsdämpfer (1), wobei der Schwingungsdämpfer (1) die Lagerung (7) an das Fahrzeug aufweist, wobei die Lagerung (7) einen Träger (16) aufweist und die Lagerung (7) von einer Lagerkappe (19) abgedeckt wird, wobei die Lagerkappe (19) mindestens eine Verdrehfläche (25) aufweist, die mit einer fahrzeugseitigen Gegenfläche zumindest während des Montageablaufs des Schwingungsdämpfers (1) in einer Aufnahmeöffnung (9) des Fahrzeugs in Wirkverbindung steht, wobei die Lagerkappe (19) einen elliptischen Querschnitt und die Aufnahmeöffnung (9) über einen gleichartigen Querschnitt verfügt, wobei die mindestens eine Verdrehfläche (25) und die Gegenfläche lagerseitige Verbindungsmittel zu fahrzeugseitigen Verbindungsmitteln rotatorisch ausrichtet, wobei die Lagerkappe drehmomentübertragende Sicherungsmittel (45) aufweist, **dadurch gekennzeichnet,**
**dass** die Lagerkappe (19) mindestens eine axial stützende Tragfläche (27) zur fahrzeugseitigen Gegenfläche aufweist und dass die Lagerkappe (19) den Schwingungsdämpfer (1) gegen Herausfallen aus
der Lagerung (7) sichert, indem der lagerseitige Träger (16), an dem der Schwingungsdämpfer (1) befestigt ist, Haltemittel in Form mindestens einer Zunge (51; 53) aufweist, die in eine Aufnahme (41) der Lagerkappe eingreift.

2. Lagerung nach Anspruch 1,
**dadurch gekennzeichnet,**
**dass** die mindestens eine Zunge (51; 53) in dem vom der Lagerkappe (19) begrenzten Bauraum verläuft.

3. Lagerung nach Anspruch 1,
**dadurch gekennzeichnet,**
**dass** die mindestens eine Aufnahme (41) unabhängig von der Drehmomentübertragungsverbindung (45; 55) zwischen der Lagerkappe (19) und dem Träger (16) ausgeführt ist.

4. Lagerung nach Anspruch 1,
**dadurch gekennzeichnet,**
**dass** die Zunge (51; 53) als ein L-förmigen Steg des Trägers (16) ausgeführt ist.

5. Lagerung nach Anspruch 1,
**dadurch gekennzeichnet,**
**dass** die Lagerkappe (19) mindestens eine Innenwandung (37; 39) aufweist, in der die Aufnahme (41) für die Zunge (51; 53) ausgeführt ist.

6. Lagerung nach Anspruch 5,
**dadurch gekennzeichnet,**
**dass** die Innenwandung (37; 39) radial elastisch ausgeführt ist.

7. Lagerung nach Anspruch 5,
**dadurch gekennzeichnet,**
**dass** die mindestens eine Innenwandung (37; 39) stirnseitig in Richtung der Zunge (51; 53) eine Einführschräge (43) aufweist.

8. Lagerung nach Anspruch 5,
**dadurch gekennzeichnet,**
**dass** die Lagerkappe (19) zwei Hauptachsen (21; 23) unterschiedlicher Länge aufweist, wobei die mindestens eine Innenwandung (37; 39) im wesentlichen parallel zur kürzeren der beiden Hauptachsen (21; 23) verläuft.

9. Lagerung nach Anspruch 8,
**dadurch gekennzeichnet,**
**dass** die mindestens eine axial stützende Tragfläche (27) im wesentlichen parallel zur längeren der beiden Hauptachsen (21; 23) verläuft.

## Claims

1. Vehicle, comprising a vibration damper (1), the vibration damper (1) having the mounting (7) to the vehicle, the mounting (7) having a carrier (16) and the mounting (7) being covered by a bearing cap (19), the bearing cap (19) having at least one rotating face (25) which is operatively connected to a vehicle-side corresponding face at least during the mounting sequence of the vibration damper (1) in a receiving opening (9) of the vehicle, the bearing cap (19) having an elliptical cross section and the receiving opening (9) having a similar cross section, the at least one rotating face (25) and the corresponding face rotationally orienting bearing-side connecting means with respect to vehicle-side connecting means, the bearing cap having torque-transmitting securing means (45), **characterized in that** the bearing cap (19) has at least one axially supporting carrying face (27) with respect to the vehicle-side corresponding face, and **in that** the bearing (19) secures the vibration damper (1) against falling out of the mounting (7), by the bearing-side carrier (16), to which the vibration damper (1) is fastened, having holding means in the form of at least one tongue (51; 53) which engages into a receptacle (41) of the bearing cap.

2. Mounting according to Claim 1, **characterized in that** the at least one tongue (51; 53) runs in the installation space which is delimited by the bearing cap (19).

3. Mounting according to Claim 1, **characterized in that** the at least one receptacle (41) is configured independently of the torque-transmitting connection (45; 55) between the bearing cap (19) and the carrier (16).

4. Mounting according to Claim 1, **characterized in that** the tongue (51; 53) is configured as an L-shaped web of the carrier (16).

5. Mounting according to Claim 1, **characterized in that** the bearing cap (19) has at least one inner wall (37; 39), in which the receptacle (41) for the tongue (51; 53) is formed.

6. Mounting according to Claim 5, **characterized in that** the inner wall (37; 39) is of radially elastic configuration.

7. Mounting according to Claim 5, **characterized in that** the at least one inner wall (37; 39) has an introduction bevel (43) on the end side in the direction of the tongue (51; 53).

8. Mounting according to Claim 5, **characterized in that** the bearing cap (19) has two main axes (21; 23) of different lengths, the at least one inner wall (37; 39) running substantially parallel to the shorter of the two main axes (21; 23).

9. Mounting according to Claim 8, **characterized in that** the at least one axially supporting carrying face (27) runs substantially parallel to the longer of the two main axes (21; 23).

## Revendications

1. Véhicule, comprenant un amortisseur de vibrations (1), l'amortisseur de vibrations (1) présentant le support sur palier (7) sur le véhicule, le support sur palier (7) présentant un support (16) et le support sur palier (7) étant recouvert par un chapeau de palier (19), le chapeau de palier (19) présentant au moins une surface de rotation (25) qui est en liaison active avec une surface conjuguée du côté du véhicule au moins pendant le déroulement du montage de l'amortisseur de vibrations (1) dans une ouverture de réception (9) du véhicule, le chapeau de palier (19) disposant d'une section transversale elliptique et l'ouverture de réception (9) disposant d'une section transversale similaire, l'au moins une surface de rotation (25) et la surface conjuguée alignant par rotation des moyens de liaison du côté du palier avec des moyens de liaison du côté du véhicule, le chapeau de palier présentant des moyens de fixation transmettant le couple (45),
**caractérisé en ce que**
le chapeau de palier (19) présente au moins une surface portante (27) à support axial pour la surface conjuguée du côté du véhicule et
le chapeau de palier (19) empêche l'amortisseur de vibrations (1) de tomber du support sur palier (7) par le fait que le support (16) du côté du palier, sur lequel est fixé l'amortisseur de vibrations (1), présente des moyens de retenue sous la forme d'au moins une langue (51 ; 53) qui viennent en prise dans un logement (41) du chapeau de palier.

2. Support sur palier selon la revendication 1,
**caractérisé en ce que**
l'au moins une langue (51 ; 53) s'étend dans l'espace structurel limité par le chapeau de palier (19).

3. Support sur palier selon la revendication 1,
**caractérisé en ce que**
l'au moins un logement (41) est réalisé indépendamment de la liaison de transfert de couple (45 ; 55) entre le chapeau de palier (19) et le support (16).

4. Support sur palier selon la revendication 1,
**caractérisé en ce que**
la langue (51 ; 53) est réalisée sous forme de nervure en forme de L du support (16).

5. Support sur palier selon la revendication 1,
**caractérisé en ce que**
le chapeau de palier (19) présente au moins une paroi interne (37 ; 39) dans laquelle le logement (41) pour la langue (51 ; 53) est réalisé.

6. Support sur palier selon la revendication 5,
**caractérisé en ce que**
la paroi interne (37 ; 39) est réalisée sous forme radialement élastique.

7. Support sur palier selon la revendication 5,
**caractérisé en ce qu**e
l'au moins une paroi interne (37 ; 39) présente, du côté frontal, dans la direction de la langue (51 ; 53), un biseau d'insertion (43).

8. Support sur palier selon la revendication 5,
**caractérisé en ce que**
le chapeau de palier (19) présente deux axes principaux (21 ; 23) de longueurs différentes, l'au moins une paroi interne (37 ; 39) s'étendant essentiellement parallèlement au plus court des deux axes principaux (21 ; 23).

9. Support sur palier selon la revendication 8,
**caractérisé en ce que**
l'au moins une surface portante à support axial (27) s'étend essentiellement parallèlement au plus long des deux axes principaux (21 ; 23).
